# EUROPÄISCHE PATENTSCHRIFT

(11) **EP 0 405 326 B1**
(45) Veröffentlichungstag und Bekanntmachung des Hinweises auf die Patenterteilung: **27.08.1997**
(21) Anmeldenummer: 90111726.7
(22) Anmeldetag: 21.06.1990
(51) Int. Cl.: C07F 7/08, C07F 7/18, C09K 19/20

(54) **Silylierte Benzoesäurederivate**
Silylated benzoic acid derivatives
Dérivés de l'acide benzoique silylés

(30) Priorität: 22.06.1989 DE 3920509; 24.04.1990 DE 4013067
(43) Veröffentlichungstag der Anmeldung: 02.01.1991
(73) Patentinhaber: Consortium für elektrochemische Industrie GmbH, D-81379 München (DE)
(72) Erfinder: Haas, Wolfgang, Dr., D-8034 Germering (DE); Häberle, Norman, Dr., D-8000 München 21 (DE); Winkler, Rainer, D-8000 München 83 (DE); Kreuzer, Franz-Heindrich, Dr., D-8033 Martinsried (DE)

(56) Entgegenhaltungen:
- EP-A- 0 141 512
- EP-A- 0 163 495
- EP-A- 0 304 720
- EP-A- 0 322 703
- EP-A- 0 333 022
- EP-A- 0 338 576
- EP-A- 0 354 753
- EP-A- 0 358 208
- MOLECULAR CRYSTALS & LIQUID CRYSTALS, Band 157, April 1988, Seiten 57-67, Montreux, CH; B.-W. JO et al.: "Synthesis and thermotropic properties of dimesogenic homologous series containing disiloxyl spacer, DI-4-(P-substituted phenoxycarbonyl) phenoxymethyl tetramethyl disiloxanes"
- POLYMER BULLETIN, Band 12, Nr. 5, November 1984, Seiten 383-388, Springer- Verlag, Heidelberg, DE; C. AQUILERA et al.: "Liquid crystal polymers. Thermotropic liquid crystalline bimesogenic molecules with highly flexible oligosiloxane spacer"
- CHEMICAL ABSTRACTS, Band 109, 1988, Seite 622, Zusammenfassung Nr. 37871e, Columbus, Ohio, US; B.L. RIVAS et al.: "Synthesis and properties of compounds with two different terminal mesogenic units and tetramethyldisiloxane as
- spacer", & BOL. SOC. CHIL. QUIM. 1987, 32(3), 143-53

## Beschreibung

Die Erfindung betrifft neue, zum Teil flüssigkristalline silylierte Benzoesäurederivate, Verfahren zu deren Herstellung und deren Verwendung.

### Stand der Technik

Flüssigkristalline Verbindungen sind u.a. durch D. Demus, H. Demus und H. Zaschke (Flüssige Kristalle in Tabellen, 1974; D. Demus und H. Zaschke, Flüssige Kristalle in Tabellen II, 1984, VEB-Verlag Leipzig) beschrieben. In US-A-4 358 391 (H. Finkelmann et al., Wacker-Chemie GmbH) sind flüssigkristalline Polymere mit Organopolysiloxanrückgrat und mesogenen Seitengruppen beschrieben. M. Petrzilka et al. (EP-A-122 389, F.Hoffmann-La Roche & Co.) beanspruchen Flüssigkristallkomponenten mit einer Alkenylkette, wobei an dieser Alkenylkette auch ein Benzoesäurederivat hängen kann. Diese Verbindungen weisen keine Organosiliciumgruppen auf. W. R. Young et al. (Molecular Crystals and Liquid Crystals, Vol. 13, Seite 305-321, 1971, Gordon and Breach Science Publishers) berichten u.a. über 4'-silylierte Benzimide von Benzoesäure-4-aminophenolester. Unten auf der Seite 309 erwähnen sie, daß diese Silicium enthaltenden Ester im Gegensatz zu vergleichbaren Substanzen keine mesomorphe Phase ausbilden, was auf die sterische Hinderung der Organosilylgruppe zurückgeführt wird.

### Aufgabe

Aufgabe der vorliegenden Erfindung war es, neue, vorzugsweise flüssigkristalline Verbindungen, insbesondere solche mit Organosiliciumgruppierungen zu synthetisieren. Eine weitere Aufgabe der vorliegenden Erfindung war es, flüssigkristalline Verbindungen herzustellen, welche mit anderen Flüssigkristallen gut mischbar, farblos und niederviskos sind. Ferner war es Aufgabe der vorliegenden Erfindung, flüssigkristalline Verbindungen darzustellen, welche sich gut als Dielektrika in Anzeigevorrichtungen eignen und insbesondere mittels derer in solchen Vorrichtungen kurze Ansprechzeiten und hohe Kontraste bewirkt werden können.

### Beschreibung

Die vorstehend genannten Aufgaben werden durch die vorliegende Erfindung gelöst durch Verbindungen der Formel 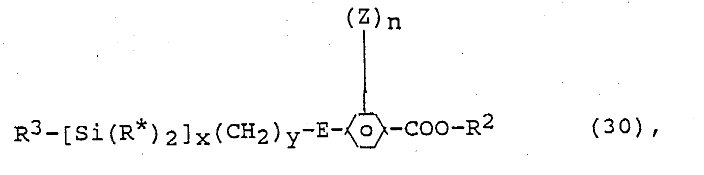 wobei
- **Z**: ein in 2-, 3-, 5- oder 6-Position an den Benzolring gebundener Rest, nämlich ein Halogenatom, eine Cyanogruppe, eine Hydroxylgruppe,
- **n**: 0, 1 oder 2,
- **R**^{**3**}: einen Rest der Formel R⁵⁻[Si(CH₃)₂O]ᵥ-
- **R**^{**5**}: C₁- bis C₁₈-Alkoxygruppen, C₁- bis C₁₈-Alkylgruppen,
- **v**: eine ganze Zahl im Wert von 1 bis 10 ist,
- **R***: gleiche oder verschiedene, gegebenenfalls substituierte, C₁- bis C₁₈-Kohlenwasserstoffreste
- **x**: die Zahl 0 oder 1,
- **y**: eine ganze Zahl von 1 bis 18,
- **E**: ein zweibindiger Rest der Formel -O- oder -[Si(R*)₂]_{z}- ist und
- **z**: die Zahl 0 oder 1 bedeutet
- **R**^{**2**}: einen einwertigen Rest der Formel -R⁴-R¹ bedeutet, wobei
- **R**^{**1**}: einen Rest R⁵, Halogenatome, Cyanogruppen, Wasserstoffatome, Hydroxylgruppen, oder einen Cholesterylrest bedeutet und
- **R**^{**4**}: einen Rest, der ausgewählt ist aus der Gruppe der gegebenenfalls halogenierten zweiwertigen Reste der Formeln 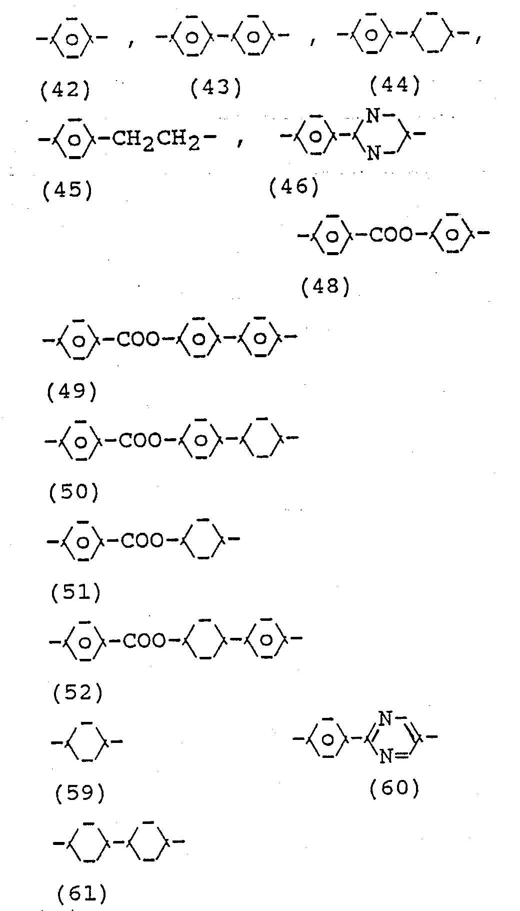
bedeutet.

Vorzugsweise hat n den Wert 0 oder 1, insbesondere 0.

Als Substituenten für die Reste R* sind Fluor- oder Chloratome, Cyanoreste und Oxiranylreste bevorzugt. Ist der Rest R* ein verzweigtkettiger Rest, so ist bevorzugt, daß der Rest R* entlang seiner längsten Kette durch Methylgruppen verzweigt ist.

Bevorzugt als erfindungsgemäße Verbindungen sind diejenigen Verbindungen der Formel (30), worin bedeuten
- **R**^{**1**}: vorzugsweise Chloratome-, vorzugsweise C₁- bis C₈-Alkoxygruppen, vorzugsweise C₁- bis C₈-Alkyl-gruppen, und/oder
- v: die Zahl 1 oder 2,
und/oder
- x: die Zahl 1
und/oder
- y: eine ganze Zahl von 3 bis 12,
und/oder
und die jeweils anderen Reste die unter Formel (30) angegeben Bedeutungen haben.

Vorzugsweise sind für die Verbindungen der Formel (30) mindestens zwei, besonders vorzugsweise mindestens drei, insbesondere mindestens vier der oben aufgeführten Bedingungen erfüllt.

Unter den oben bezeichneten Verbindungen sind die flüssigkristallinen Verbindungen bevorzugt.

### Herstellungsverfahren

### Verfahren 1

Verbindungen der Formel (30) können hergestellt werden durch Umsetzung von Verbindungen der Formel 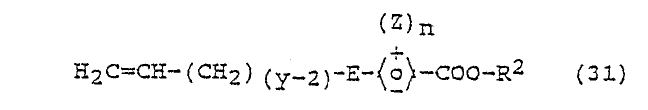 mit Verbindungen der Formel

R³-[Si(R*)₂]ₓ-H (32),

in Gegenwart von Platinmetallen und/oder deren Verbindungen, wobei in den obigen Formeln (31) und (32) n, x, y, E, Z, R*, R², R³ und R⁴ die zu Formel (30) angegebenen Bedeutungen besitzen.

Als Platinmetalle und/oder deren Verbindungen werden vorzugsweise Platin und/oder dessen Verbindungen eingesetzt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆∗6H₂O, Na₂PtCl₄∗4H₂O, Platin-Olefin-Komplexe, Platin-Alkohol-Komplexe, Platin-Alkoholat-Komplexe, Platin-Ether-Komplexe, Platin-Aldehyd-Komplexe, Platin Platin-Keton-Komplexe, einschließlich Umsetzungsprodukten aus H₂PtCl₆∗6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetra-chlorid mit sec.-Butylamin, oder Ammonium-Platinkomplexe gemäß EP-B 110 370.

Platinkatalysator wird vorzugsweise in Mengen von 0,1 bis 50 Mol% bezogen auf die Molzahl derjenigen der Ausgangsstoffe der Formeln (31) oder (32), welche im Unterschuß oder in stöchiometrischer Menge vorliegen, eingesetzt.

Die Reaktion wird vorzugsweise bei Temperaturen von 0 °C bis 110 °C, vorzugsweise bei Drücken von 0,05 MPa bis 1,0 MPa durchgeführt.

Sollten die Verbindungen der Formeln (31) und (32) sehr reaktionsträge sein, kann auch bei höheren Temperaturen, höheren Drücken und in Anwesenheit von mehr Platinkatalysator gearbeitet werden.

Vorzugsweise wird die Reaktion in einem Lösungsmittel durch-geführt, welches insbesondere aprotisch sein sollte;Lösungsmittel oder Lösungsmittelgemische mit einem Siedepunkt bzw. Siedebereich von bis zu 160 °C, insbesondere von bis zu 120 °C bei jeweils 0,1 MPa (abs.) sind bevorzugt. Beispiele für Lösungsmittel sind Ester, wie Methylacetat, Ethylacetat, n- und iso-Propylacetat, n-, sec.- und t.-Butylacetat, Ethylformiat und Diethylcarbonat; Ether, wie Dioxan, Tetrahydrofuran, Diethylether, Di-n-propylether, Diisopropylether, Di-n-butylether, Ethylenglycolmonomethylether, Ethylenglycolmanoethylether, Diethylenglycoldimethylether und Anisol; chlorierte Kohlenwasserstoffe, wie Dichlormethan, Trichlormethan, Tetrachlormethan, 1,2-Dichlorethan, Trichlorethylen, Tetrachlorethylen und Chlorbenzol; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methylisobutylketon; Schwefelkohlenstoff, Pyridin, Acetonitril und Nitrobenzol oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Vorzugsweise werden die Verbindungen (31) im Vergleich zu Verbindung der Formel (32) im erfindungsgemäßen Verfahren im Molverhältnis 1:2 bis 2:1, insbesondere von 1:1,1 bis 1,1:1 eingesetzt.

Die Verbindungen der Formeln (31) und (32) sind teilweise käuflich. Sie lassen sich mit Hilfe bekannter Methoden aus bekannten Verbindungen herstellen (beispielsweise gemäß: Houben-Weyl-Müller, Methoden der Organischen Chemie, Georg Thieme Verlag, Stuttgart).

Die Einführung des Alkenylrestes in Verbindungen der Formel (31) gelingt beispielsweise durch Reaktion der entsprechenden Alkenylhalogenide mit metallorganischen Benzolderivaten, insbesondere mit den entsprechenden Grignard-Reagentien oder Organolithiumverbindungen, beispielsweise 4-Halogenphenyl-magnesiumhalogenid. Üblicherweise erfolgt diese Umsetzung in einem gegen die eingesetzte metallorganische Verbindung inertem Lösungsmittel, wie Diethylether, Methyltert.-butylether, Tetrahydrofuran, 1,4-Dioxan, Acetonitril, Kohlenwasserstoffen und deren Gemischen, wie Toluol, Benzol, Hexanisomerengemisch. Sie wird vorzugsweise bei Temperaturen von -100 °C bis +110 °C, insbesondere bei Drücken von 0,09 bis 0,11 MPa (abs.) durchgeführt. Die Umsetzung kann unter Umständen durch Ultraschall beschleunigt werden. Gemäß Verfahren 1 wurden die Beispiele 1 und 2 durchgeführt.

### Verfahren 2

Die Herstellung von Verbindungen der Formel Formel (30) kann auch erfolgen durch
(a) Umsetzung von Verbindungen der Formel 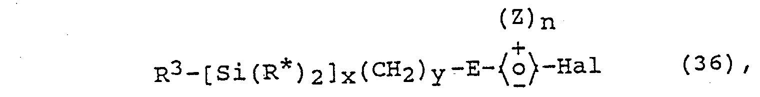 worin **Hal** ein Halogenatom, vorzugsweise Chlor oder Brom ist, mit Metall, vorzugsweise Magnesium, und Reaktion der so erhaltenen metallorganischen Verbindung entweder mit
(b) Verbindungen der Formel

   Hal-COO-R² (37),

   worin Hal die für Formel (36) und R² die zu Formel (30) angegebene Bedeutung hat.

Die oben genannten Umsetzungen (a) und (b) finden vorzugsweise in einem aprotischen, im wesentlichen wasserfreien Lösungsmittel statt. Beispiele für solche Lösungsmittel sind die für das Verfahren 1 oben als geeignet genannten Lösungsmittel.

### Verfahren 3

Verfahren 2 kann auch dadurch abgewandelt werden, indem man Verbindungen der Formel (36) einsetzt, in denen der Rest der Formel

R³-[Si(R*)₂]ₓ(CH₂)_{y}-E-

durch einen Rest der Formel

H₂C=CH-(CH₂)_{(y-2)}-E- (40),

ersetzt ist,
und das aus der Umsetzung erhaltene Produkt anschließend gemäß dem Verfahren 1 behandelt.

### Verwendung

Die erfindungsgemäßen bzw. erfindungsgemäß herstellbaren flüssigkristallinen Verbindungen können in Anzeigevorrichtungen verwendet werden, besonders in Anzeigevorrichtungen, welche unter Verwendung von smektischen Flüssigkristall(mischungen) hergestellt werden. Dabei können reine Verbindungen der Formel (30), deren Mischungen und insbesondere Mischungen von flüssigkristallinen Verbindungen der Formel (30) mit anderen Flüssigkristallen verwendet werden. Die erfindungsgemäßen Verbindungen eignen sich zur Herstellung von smektischen Gemischen, vor allem für Gemische, welche eine smektische C-Phase ausbilden können. Sie können aber auch als Zusätze zu nematischen oder cholesterischen Phasen Verwendung finden. Mit Hilfe von Verbindungen der Formel (30) lassen sich sowohl flüssigkristalline Basismischungen herstellen als auch die Eigenschaften bereits fertiggestellter Basismischungen - wie beispielsweise die optische Anisotropie, die elektrische Anisotropie, die spontane Polarisation, die Viskosität,- der Tiltwinkel, der Pitch und das Phasenverhalten -günstig verändern.

Der Anteil der erfindungsgemäßen flüssigkristallinen silylierten Benzoesäurederivate in Flüssigkristallmischungen kann je nach Verwendungszweck in breiten Grenzen variieren. Er kann beispielsweise von 1 Gewichtsprozent bis zu 100 Gewichtsprozent betragen.

Soweit die erfindungsgemäßen Verbindungen enantiomer oder diastereomer sind, so umfaßt die vorliegende Erfindung die einzelnen Enantiomere bzw. Diastereomere und deren Gemische, also u.a. Racemate.

### Beispiele 1 :

Zu einer Lösung von 20.0g (47.2 mmol) 4-5'-Hexenyloxybenzoesäure-(4-octyloxyphenylester) und 7.10g (48.0 mmol) Pentamethyldisiloxan in 20.0g Toluol wurden 0.94g (0.024 mmol Pt) 0.5%ige Dicyclopentadienylplatindichloridlösung (Dichlormethan) zugegeben und 5h refluxiert. Nach vollständiger Hydrosilylierung des Olefins wurde das Reaktionsgemisch mit Stickstoff gespült und das Toluol am Rotationsverdampfer unter Vakuum abdestilliert. Das Rohprodukt wurde zur Reinigung über Kieselgel chromatographiert. Der erhaltene 4-(1'-Pentamethyldisiloxylhexyloxy)benzoesäure-(4-octyloxyphenylester) wurde zusätzlich aus Ethanol umkristallisiert und zeigte folgendes Phasenverhalten: k 38 s 50 i.

Analog wurden dargestellt:
4-(1'-Pentamethyldisiloxylpropyloxy)benzoesäure-(4-propyloxyphenylester), Phasen: k 50 i.
4-(1'-Pentamethyldisiloxylpropyloxy)benzoesäure-(4-octyloxyphenylester), Phasen: k 30-33 i.
4-(1'-Pentamethyldisiloxylpentyloxy)benzoesäure-(4'-octyloxyphenylester), Phasen: sC 47 i.
4-(1'-Pentamethyldisiloxylhexyloxy)benzoesäure-(4-butyloxyphenylester), Phasen: k 46 (s? 43-44) i.
4-(1'-Pentamethyldisiloxylpropyloxy)benzoesäure-4-(2'-(S)-methylbutyloxyphenylester), Phasen: k 17 i.
4-(1'-Pentamethyldisiloxylpentyloxy)benzoesäure-(4-2'-(S)-methylbutyloxyphenylester), Phasen: k 62-63 i.
4-(1'-Pentamethyldisiloxylhexyloxy)benzoesäure-(4-2'-(S)-methylbutyloxyphenylester), Phasen: k 34 i.
4-(1'-Pentamethyldisiloxylpropyloxy)benzoesäure-(4'-propylphenylester), Phasen: k 36-37 (s) i.
4-(1'-Pentamethyldisiloxylpentyloxy)benzoesäure-(4'-butylphenylester), Phasen: k 7 (sC-2--1 sA 1-2)i.
4-(3-Pentamethyldisiloxanylpropyloxy)benzoesäure-(4,4'-pentylbiphenylester); Phasen: k 74-78 sA 106-107 i
4-(6-Pentametyldisiloxylbutyloxy)benzoesäure-(4,4'-pentylbiphenylester); Phasen: k 80 sA 115-116 i
4-(5-Pentamethyldisiloxanylpentyloxy)benzoesäure-(4,4'-pentylbiphenylester); Phasen: k79-81 sA 114-116 i
4-(6-Pentametyldisiloxylhexyloxy)benzoesäure-(4,4'-pentylbiphenylester); Phasen: g 56 sA 128-131 i
4-(3-Pentamemthyldisiloxanylpropyloxy)benzoesäure-(4,4'-ethylbiphenylester); Phasen: k 77 sC 92 sA 92-93 i
4-(3-Pentamethyldisiloxanylpropyloxy)benzoesäure -(4-(4-trans-propylcyclohexylen)pheny lester); Phasen: k 105 i
4-(6-Pentamethyldisiloxanylhexyloxy)benzoesäure-(2-chlor-4-oxtyloxypenylester); Phasen: g -54 s -2 i

### Beispiele 2:

Zu einer Lösung von 13.8g (42.9 mmol) 4-(5'-Hexenyloxy)benzoesäure-(4-cyanophenylester) und 6.48g (43.7 mmol) Pentamethyldisiloxan in 50.0g Toluol wurden 0.94g (0.024 mmol Pt) 0.5%ige Dicyclopentadienylplatindichloridlösung (Dichlormethan) zugegeben und 3h refluxiert. Zur vollständigen Hydrosilylierung des Olefins wurden erneut 0.94g (0.024 mmol Pt) 0.5%ige Dicyclopentadienylplatindichloridlösung (Dichlormethan) zugegeben und weitere 2h refluxiert. Das Reaktionsgemisch wurde mit Stickstoff gespült und das Toluol am Rotationsverdampfer unter Vakuum abdestilliert. Das Rohprodukt wurde zur Reinigung über Kieselgel chromatographiert. Der erhaltene 4-(1'-Pentamethyldisiloxylhexyloxy)benzoesäure-4-cyanophenylester wurde zusätzlich aus Benzin (100°C - 140°C) umkristallisiert und zeigte folgendes Phasenverhalten: k 54-55 (sA 53-55) i.

Analog wurden dargestellt:
4-(1'-Pentamethyldisiloxylpropyloxy)benzoesäure-4-cyanophenylester, Phasen; k 65 (sA 26-28) i.
4-(1'-Pentamethyldisiloxylbutyloxy)benzoesäure-4-cyanophenylester, Phasen: k 68 i.
4-(1'-Pentamethyldisiloxylpentyloxy)benzoesäure-(4-cyanophenylester), Phasen: sA 55-56 i.
4-(1'-Pentamethyldisiloxylpropyloxy)benzoesäure-(4'-cyanobiphenylester), Phasen: k 86 sA 209-210 i.
4-(1'-Pentamethyldisiloxylpentyloxy)benzoesäure-(4'-cyanobiphenylester), Phasen: k 48 sA 215 i.
4-(6-Heptamethyltrisiloxanylhexyloxy)benzoesäure-(4,4'-cyanobiphenylester), Phasen: k + sA 39 sA 193-197 i.
4-(6-Nonamethyltetrasiloxanylhexyloxy)benzoesäure-(4,4'-cyanobiphenylester), Phasen: sC 91 sA 178-181 i.
4-(6-Undecamethylpentasiloxanylhexyloxy)benzoesäure-(4,4'-cyanobiphenylester), Phasen: sC 77 sA 154-156 i.
4-(6-Tridecamethylhexasiloxanylhexyloxy)benzoesäure-(4,4'-cyanobiphenylester), Phasen: sC 43 sA 135-141 i.
4-(6-Pentadecamethylheptasiloxanylhexyloxy)benzoesäure-(4,4'-cyanobiphenylester), Phasen: sC 42 sA 127-129 i.

## Patentansprüche

1. Verbindungen der Formel 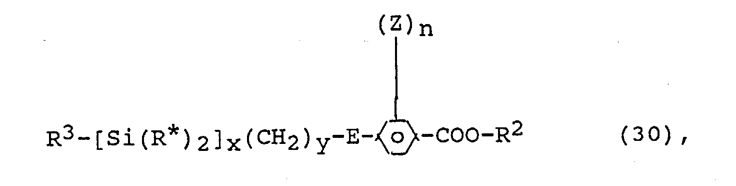 wobei
**Z** ein in 2-, 3-, 5- oder 6-Position an den Benzolring gebundener Rest, nämlich ein Halogenatom, eine Cyanogruppe, eine Hydroxylgruppe,
**n** 0, 1 oder 2,
**R**^{**3**} einen Rest der Formel R⁵-[Si(CH₃)₂O]ᵥ-
**R**^{**5**} C₁- bis C₁₈-Alkoxygruppen, C₁- bis C₁₈-Alkylgruppen,
**v** eine ganze Zahl im Wert von 1 bis 10 ist,
**R*** gleiche oder verschiedene, gegebenenfalls substituierte, C₁- bis C₁₈-Kohlenwasserstoffreste
**x** die Zahl 0 oder 1,
**y** eine ganze Zahl von 1 bis 18,
**E** ein zweibindiger Rest der Formel -O- oder - [Si(R*)₂]_{z}- ist und
**z** die Zahl 0 oder 1 bedeutet
**R**^{**2**} einen einwertigen Rest der Formel -R⁴-R¹ bedeutet, wobei
**R**^{**1**} einen Rest R⁵, Halogenatome, Cyanogruppen, Wasserstoffatome, Hydroxylgruppen, oder einen Cholesterylrest bedeutet und
**R**^{**4**} einen Rest, der ausgewählt ist aus der Gruppe der gegebenenfalls halogenierten zweiwertigen Reste der Formeln 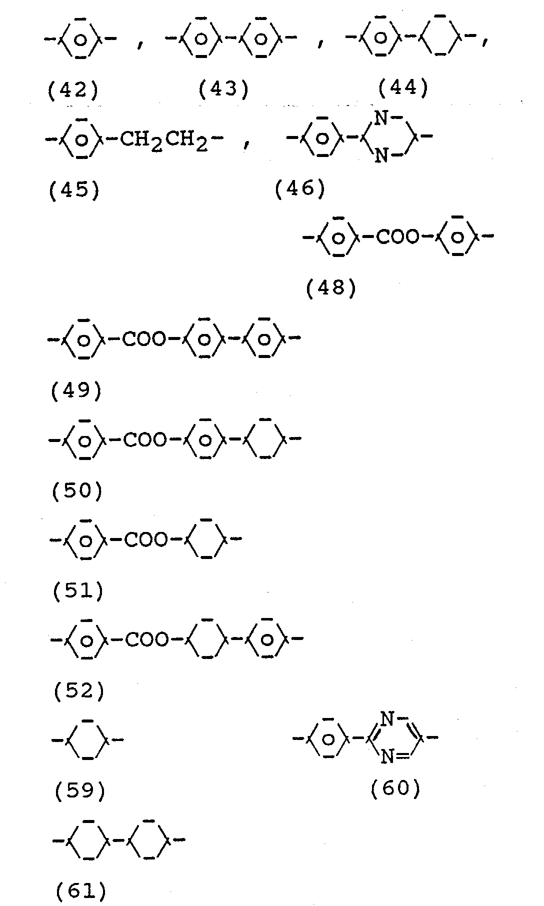
bedeutet.

2. Verfahren zur Herstellung von Verbindungen der Formel (30) gemäß Anspruch 1 durch Umsetzung von Verbindungen der Formel 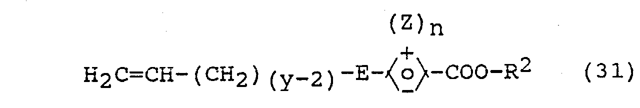 mit Verbindungen der Formel
R³-[Si(R*)₂]ₓ-H (32),
in Gegenwart von Platinmetallen und/oder deren Verbindungen, wobei in den obigen Formeln (31) und (32) n, x, y, E, Z, R* R², R³ und R⁴ die in Anspruch 1 angegebenen Bedeutungen besitzen.

3. Verfahren zur Herstellung von Verbindungen der Formel (30) gemäß Anspruch 1 durch
(a) Umsetzung
von Verbindungen der Formel 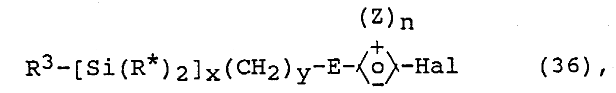 worin **Hal** ein Halogenatom, vorzugsweise Chlor oder Brom ist, mit Metall, vorzugsweise Magnesium, und Reaktion der so erhaltenen metallorganischen Verbindung mit
(b) Verbindungen der Formel
Hal-COO-R² (37),
worin Hal die für Formel (36) und R² die in Anspruch 1 angegebene Bedeutung hat.

4. Verfahren nach Anspruch 3, mit der Maßgabe, daß in den Verbindungen der Formel (36) der Rest der Formel R³-[Si(R*)₂]ₓ(CH₂)_{y}-E- durch einen Rest der Formel
H₂C=CH-(CH₂)_{(y-2)}-E- (40),
ersetzt ist,
und das aus der Umsetzung erhaltene Produkt anschließend gemäß dem Verfahren nach Anspruch 2 behandelt wird.

5. Verwendung der flüssigkristallinen Verbindungen gemäß Anspruch 1 in Anzeigevorrichtungen.

## Claims

1. Compounds of the formula 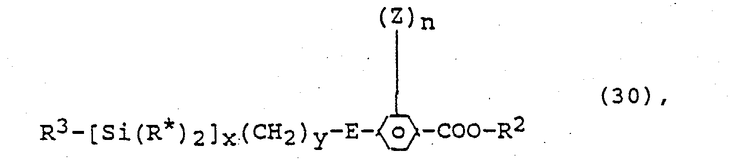 where
**Z** is a radical, namely a halogen atom, a cyano group or a hydroxyl group, bonded to the benzene ring in the 2-, 3-, 5- or 6-position,
**n** i-s 0, 1 or 2,
**R**^{**3**} is a radical of the formula R⁵-[Si(CH₃)₂O]ᵥ-
**R**^{**5**} is a C₁- to C₁₈-alkoxy group, a C₁- to C₁₈-alkyl group,
**v** is an integer having a value of from 1 to 10,
**R*** is identical or different, optionally substituted C₁- to C₁₈-hydrocarbon radicals,
**x** is the number 0 or 1,
**y** is an integer from 1 to 18,
**E** is a divalent radical of the formula -O- or -[Si(R*)₂]_{z}-, and
**z** is the number 0 or 1,
**R**^{**2**} is a monovalent radical of the formula -R⁴-R¹, where
**R**^{**1**} is a radical R⁵, a halogen atom, a cyano group, a hydrogen atom, a hydroxyl group, or a cholesteryl radical, and
**R**^{**4**} is a radical selected from the group comprising the optionally halogenated, divalent radicals of the formulae

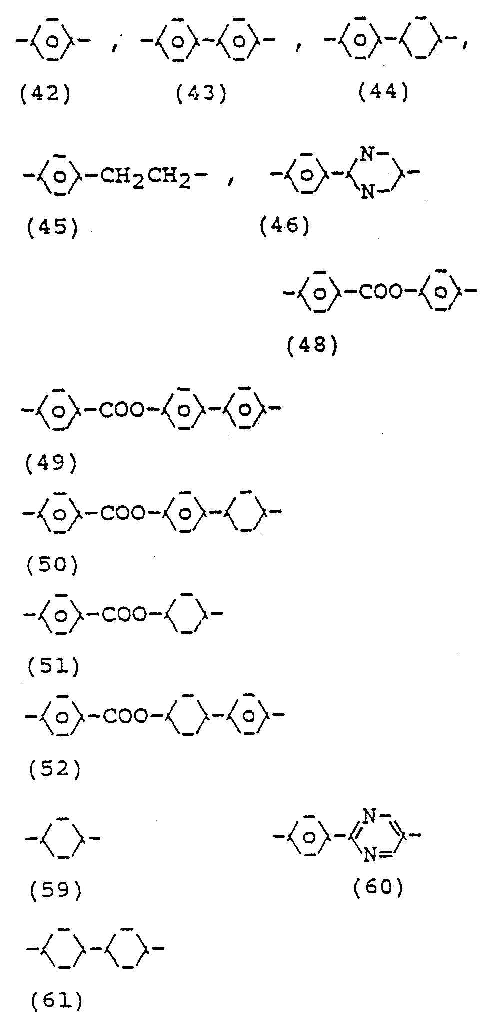

2. Process for the preparation of compounds of the formula (30) according to Claim 1 by reacting compounds of the formula 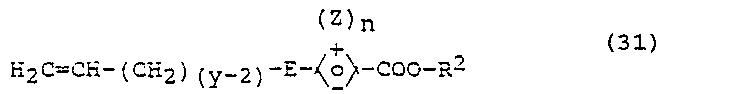 with compounds of the formula
R³- [Si(R*)₂]ₓ-H (32)
in the presence of platinum metals and/or compounds thereof, where, in the above formulae (31) and (32), n, x, y, E, Z, R* R², R³ and R⁴ are as defined in claim 1.

3. Process for the preparation of compounds of the formula (30) according to Claim 1 by
(a) reacting compounds of the formula 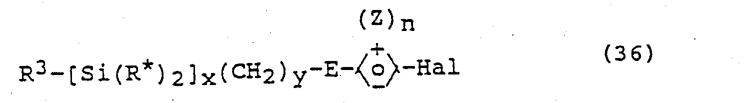 in which **Hal** is a halogen atom, preferably chlorine or bromine, with a metal, preferably magnesium, and reacting the resultant organometallic compound with
(b) compounds of the formula
Hal-COO-R² (37)
in which Hal is as defined in the formula (36) and R² is as defined in Claim 1.

4. Process according to Claim 3, with the proviso that, in the compounds of the formula (36), the radical of the formula
R³-[Si(R*)₂]ₓ(CH₂)_{y}-E-
has been replaced by a radical of the formula
H₂C=CH-(CH₂)_{(y-2)}-E- (40)
and the product obtained from the reaction is subsequently treated as in the process according to Claim 2.

5. Use of the liquid-crystalline compounds according to Claim 1 in display devices.

## Revendications

1. Composés de formule : 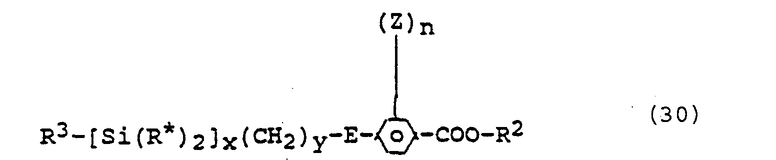 où :
Z représente un radical fixé au cycle benzénique en position 2, 3, 5 ou 6, à savoir un atome d'halogène, un groupe cyano, un groupe hydroxyle;
n représente 0, 1 ou 2;
R³ représente un radical de formule
R⁵-[Si(CH₃)₂O]ᵥ-;
R⁵ représente un groupe alcoxy en C₁ à C₁₈, un groupe alcoyle en C₁ à C₁₈;
v représente un nombre entier de valeur 1 à 10;
R* représente des radicaux hydrocarbures en C₁ à C₁₈ identiques ou différents, facultativement substitués;
x représente le nombre 0 ou 1;
y représente un nombre entier de 1 à 18;
E représente un radical bivalent de formule -O- ou -[Si(R*)₂]_{z}-, et
z représente le nombre 0 ou 1;
R² représente un radical monovalent de formule -R⁴-R¹, où
R¹ représente un radical R⁵, un atome d'halogène-, un groupe cyano, un atome d'hydrogène, un groupe hydroxyle ou un radical cholestéryle, et
R⁴ représente un radical choisi dans le groupe des radicaux bivalents facultativement halogénés, de formule :

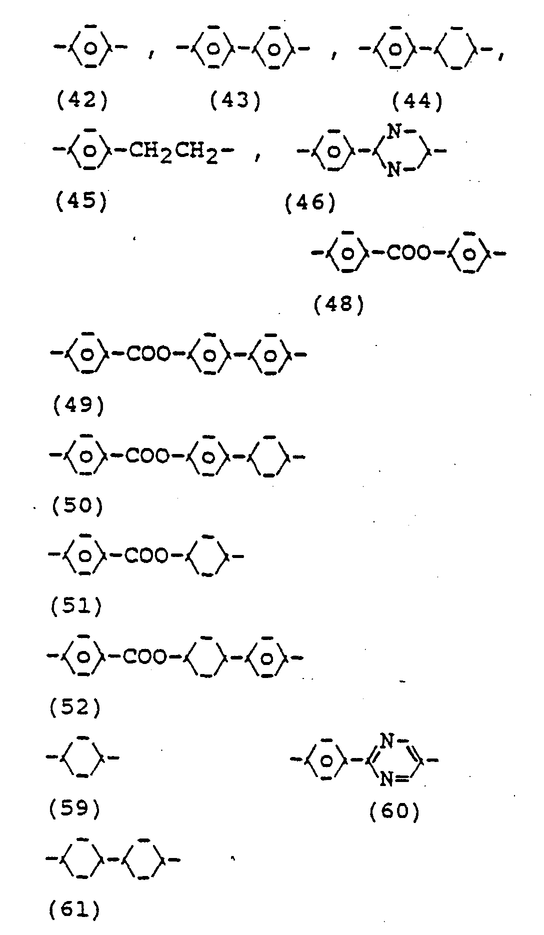

2. Procédé de préparation des composés de formule (30) suivant la revendication 1, par réaction des composés de formule : 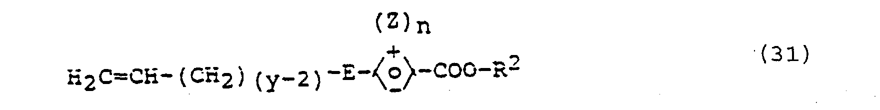 avec des composés de formule :
R³-[Si(R*)₂]ₓ-H (32)
en présence de métaux du platine et/ou de leurs composés, où, dans les formules (31) et (32) ci-dessus, n, x, y, E, Z, R*, R², R³ et R⁴ possèdent les significations données à la revendication 1.

3. Procédé de préparation des composés de formule (30) suivant la revendication 1, par
(a) la réaction de composés de formule : 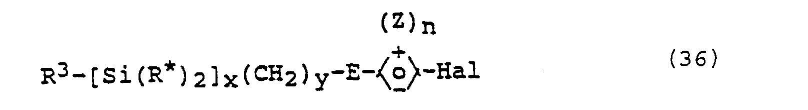 où Hal est un atome d'halogène, de préférence chlore ou brome, avec un métal, de préférence le magnésium, et la réaction du composé organométallique ainsi obtenu avec
(b) des composés de formule :
Hal-COO-R² (37)
où Hal a la signification donnée pour la formule (36) et R², celle de la revendication 1.

4. Procédé suivant la revendication 3, avec la condition que, dans les composés de formule (36), le radical de formule R³-[Si(R*)₂]ₓ(CH₂)_{y}-E-, est remplacé par un radical de formule H₂C=CH-(CH₂)_{(y-2)}-E- (40) et le produit obtenu de la réaction est ensuite traité par le procédé suivant la revendication 2.

5. Utilisation de composés de type cristaux liquides, suivant la revendication 1, comme dispositifs d'affichage.
